# EUROPEAN PATENT APPLICATION

(11) **EP 3 950 096 A1**
(43) Date of publication of application: **09.02.2022**
(21) Application number: 20783056.3
(22) Date of filing: 31.03.2020
(51) Int. Cl.: B01D 53/62, B01D 53/14, B01D 53/50, B01D 53/75, B01D 53/80

(54) **DEVICE AND METHOD PERTAINING TO GAS PURIFICATION TREATMENT AND/OR COMBUSTION ASH NEUTRALIZATION TREATMENT**

(30) Priority: 01.04.2019 JP 2019070190
(71) Applicant: Mitsubishi Power, Ltd., Nishi-ku, Yokohama-shi Kanagawa 220-8401 (JP)
(72) Inventor: OMINE, Naruhito, Yokohama-shi, Kanagawa 220-8401 (JP); KIKKAWA, Hirofumi, Yokohama-shi, Kanagawa 220-8401 (JP); IMADA, Noriyuki, Yokohama-shi, Kanagawa 220-8401 (JP)
(74) Representative: Bongiovanni, Simone
(86) International application number: PCT/JP2020/014820
(87) International publication number: WO 2020/204026

(57) **Abstract**

A method for purifying combustion exhaust gas, which comprises passing the combustion exhaust gas through a wet flue gas desulfurization apparatus to remove sulfur oxides from the combustion exhaust gas to obtain a gas containing carbon dioxide, and bring the obtained gas containing carbon dioxide into contact with a water slurry containing combustion ash to remove carbon dioxide from the gas containing carbon dioxide; and a method for neutralizing combustion ash, which comprises suspending combustion ash in water, a water slurry containing calcium or an aqueous solution containing calcium to obtain a water slurry containing combustion ash, bringing the water slurry containing combustion ash into contact with a gas containing carbon dioxide discharged from a wet flue gas desulfurization apparatus to obtain a water slurry containing carbonic acid-treated ash, and separating and removing solids from the water slurry containing carbonic acid-treated ash.

## Description

### TECHNICAL FIELD

The present invention relates to a device and a method relating to a gas purification treatment for removing carbon dioxide and the other contained in combustion exhaust gas and / or a combustion ash neutralization treatment for utilization or disposal of combustion ash.

### BACKGROUND ART

In recent years, with the economic development of developing countries, the influence of global human activities has increased, and there is growing concern that it may lead to global environmental changes such as global warming. Under such circumstances, it is required to reduce carbon dioxide emissions, which is considered to be one of the causes of global warming. On the other hand, since ash produced when burning biomass, coal, etc. is strongly basic, it is required to dispose of it safely.

Patent Document 1 discloses a wastewater treatment method for a limestone-gypsum wet flue gas desulfurization apparatus -, characterized in that the wastewater is not discharged from the flue gas desulfurization system, by concentrating the wastewater from the wet limestone-gypsum flue gas desulfurization apparatus applied to the treatment of combustion exhaust gas, returning the recovered water to the flue gas desulfurization apparatus, and adding coal ash to the concentrated water to form a slurry, and then the water in the slurry is evaporated to generate a descent containing the hydration reaction product of the dissolved component in the wastewater and coal ash.

Patent Document 2 discloses a wet flue gas desulfurization method comprising guiding combustion exhaust gas to an absorption tower and absorbing and removing sulfur oxides in the exhaust gas by an absorbent slurry, characterized in that a part of the absorbent slurry is extracted from the absorption tower, coal ash and slaked lime are added and mixed thereto, and then the mixture is heated to obtain a non-polluting solid substance.

Patent Document 3 discloses a method for simultaneous dust removal and desulfurization comprising absorbing and removing sulfur oxides in combustion exhaust gas with a desulfurizing agent containing an alkaline substance, characterized in that exhaust gas containing coal combustion ash is cooled to not more than 40 °C to obtain a condensed water, coal combustion ash is mixed in the condensed water, and sulfur oxides in the exhaust gas is separated and removed using a desulfurization absorbent produced by adding a desulfurizing agent to the slurry composed of the coal combustion ash and the condensed water.

Patent Document 4 discloses a method for solidifying coal ash from desulfurized wastewater, in a desulfurization wastewater treatment method comprising discharging desulfurization wastewater to the outside of the system from the absorption tower of the wet limestone - gypsum desulfurization equipment installed in the exhaust gas line, characterized in that the chlorine ion concentration in the absorption liquid circulating in the absorption tower is detected, and the chlorine ion concentration in the absorption liquid is concentrated to a predetermined concentration by adjusting the amount of the absorption liquid extracted from the absorption tower and the amount of make-up water from outside the system, the absorption liquid that is extracted from the inside of the absorption tower to the outside of the system is sent to the Gypsum recovery device, and the remaining absorption liquid that separates and recovers the Gypsum is sent to the concentration tower installed in the exhaust gas line, and chlorine ion concentration in a circulated water in the concentration tower is concentrated by contacting with the combustion exhaust gas, at least one substance of coal ash, lime and cement is added to the liquid extracted from the concentration tower, and the resultant is dried.

Patent Document 5 discloses a absorption and immobilization method of carbon dioxide, characterized in that the combustion exhaust gas is brought into gas-liquid contact with a coal ash water slurry or a coal ash water eluate so that carbon dioxide in the combustion exhaust gas is reacted and absorbed to be immobilized as a carbonate.

Patent Document 6 discloses a method for immobilizing carbon dioxide, characterized in that at least one of fuel, waste, and biomass containing ash elements is put into a combustion furnace and burned, a sensible heat of the combustion exhaust gas is recovered, the combustion exhaust gas after the heat recovery is delivered to a CO₂ immobilization reactor, combustion ash from the combustion furnace is delivered to a CO₂ immobilization reactor, the combustion exhaust gas and the combustion ash are brought into contact with each other in the CO₂ immobilization reactor, and the carbon dioxide in the combustion exhaust gas is carbonized by the metal oxide contained in the combustion ash to be immobilized as a carbonate, and the reaction heat generated during the carbonization is recovered and the recovered heat is used for power generation.

Patent Document 7 discloses a biomass co-firing boiler system, comprising a vertical coal crusher for crushing coal, a vertical biomass crusher for crushing solid fuel containing biomass, a boiler for burning the crushed coal and the crushed solid fuel, and a dust collector for removing ash in the combustion exhaust gas discharged from the boiler, characterized in that an exhaust gas input line is provided to take out a part of the combustion exhaust gas discharged from the dust collector and to lead it to the vertical biomass crusher, a slurry manufacturing apparatus for producing a desulfurized slurry containing coal ash collected by the dust collector and an alkaline salt as a desulfurized portion is provided and a slurry supply line that guides the desulfurization slurry to the vertical crusher for biomass is provided.

### CITATION LIST

### PATENT LITERATURES

[Patent Document 1] JP H03-8411 A
[Patent Document 2] JP H04-141216 A
[Patent Document 3] JP H06-126127 A
[Patent Document 4] JP H09-29058 A
[Patent Document 5] JP 2004-261658 A
[Patent Document 6] JP H11-192416 A
[Patent Document 7] JP 2012-137250 A

### SUMMARY OF THE INVENTION

### PROBLEMS TO BE SOLVED BY THE INVENTION

An object of the present invention is to provide a device and a method relating to a combustion exhaust gas purification treatment for removing carbon dioxide and the like contained in a combustion exhaust gas and / or a combustion ash neutralization treatment for utilization or disposal of combustion ash.

### MEANS FOR SOLVING THE PROBLEM

In order to solve the above problems, the present invention including the following embodiments has been completed.
[1] A method for purifying combustion exhaust gas, which comprises passing the combustion exhaust gas through a wet flue gas desulfurization apparatus configured to remove sulfur oxides from the combustion exhaust gas to obtain a gas containing carbon dioxide, and bringing the obtained gas containing carbon dioxide into contact with a water slurry containing combustion ash to remove carbon dioxide from the gas containing carbon dioxide.
[2] The method for purifying combustion exhaust gas according to [1], wherein the water slurry containing combustion ash is one obtained by adding and suspending the combustion ash to a water slurry or an aqueous solution containing calcium discharged from the wet flue gas desulfurization apparatus.
[3] The method for purifying combustion exhaust gas according to [1] or [2], wherein the combustion ash is coal ash, biomass ash, or a mixture of coal ash and biomass ash.
[4] The method for purifying combustion exhaust gas according to any one of [1] to [3], wherein the wet flue gas desulfurization apparatus comprises a gas absorption device configured to bring the combustion exhaust gas into contact with a water slurry containing limestone, slaked lime or quick lime.
[5] The method for purifying combustion exhaust gas according to [4], wherein the wet flue gas desulfurization apparatus further comprises a device for separating and removing gypsum.
[6] A method for neutralizing combustion ash, which comprises
   suspending combustion ash in water, a water slurry containing calcium or an aqueous solution containing calcium to obtain a water slurry containing combustion ash,
   bringing the water slurry containing combustion ash into contact with a gas containing carbon dioxide discharged from a wet flue gas desulfurization apparatus to obtain a water slurry containing carbonic acid-treated ash, and
   separating and removing solids from the water slurry containing carbonic acid-treated ash.
[7] The method for neutralizing combustion ash according to [6], wherein the combustion ash comprises biomass ash.
[8] The method for neutralizing combustion ash according to [6] or [7], wherein the wet flue gas desulfurization apparatus comprises a gas absorption device configured to bring the combustion exhaust gas into contact with a water slurry containing limestone, slaked lime or quick lime.
[9] The method for neutralizing combustion ash according to [8], further comprising adding a liquid obtained by separating the solids from the water slurry containing carbonic acid-treated ash to a water slurry or an aqueous solution containing calcium discharged from the wet flue gas desulfurization apparatus.
[10] A device for purifying combustion exhaust gas, comprising
   a furnace,
   a wet flue gas desulfurization apparatus,
   a carbon dioxide removal apparatus,
   a duct configured to guide a combustion exhaust gas discharged from the furnace to the wet flue gas desulfurization apparatus, and
   a duct configured to guide a gas containing carbon dioxide discharged from the wet flue gas desulfurization apparatus to the carbon dioxide removal apparatus;
   wherein the carbon dioxide removal apparatus comprises a water slurry containing combustion ash, and is configured to bring the gas containing the carbon dioxide into contact with the water slurry containing combustion ash to facilitate a removing carbon dioxide from the gas containing the carbon dioxide.
[11] The device for purifying combustion exhaust gas according to [10], further comprising an apparatus for adding and suspending combustion ash to a water slurry containing calcium or an aqueous solution containing calcium discharged from the wet flue gas desulfurization apparatus to obtain the water slurry containing combustion ash.
[12] The device for purifying combustion exhaust gas according to [10] or [11], wherein the combustion ash is coal ash, biomass ash, or a mixture of coal ash and biomass ash.
[13] The device for purifying combustion exhaust gas according to any one of [10] to [12], wherein the wet flue gas desulfurization apparatus comprises a gas absorption device configured to bring the combustion exhaust gas into contact with a water slurry containing limestone, slaked lime or quick lime.
[14] The device for purifying combustion exhaust gas according to [13], wherein the wet flue gas desulfurization apparatus further comprises a device for separating and removing gypsum.
[15] A device for neutralizing combustion ash, comprising
   a wet flue desulfurization apparatus,
   a combustion ash carbonic acid-treatment apparatus, a carbonic acid-treated ash separation device, and a duct configured to guide a gas containing carbon dioxide discharged from the wet flue gas
   desulfurization apparatus to the combustion ash carbonic acid-treatment apparatus,
   wherein the combustion ash carbonic acid-treatment apparatus comprises a device for preparing a water slurry containing combustion ash, and is configured to bring a gas containing carbon dioxide into
   contact with the water slurry containing combustion ash obtained by the preparation device to facilitate a converting the water slurry containing combustion ash into a water slurry containing carbonic acid-treated ash, and carbonic acid-treated ash
   separation device is configured to facilitate a separating and removing solids from the water slurry containing carbonic acid-treated ash.
[16] The device for neutralizing the combustion ash according to [15], wherein the combustion ash contains biomass ash.
[17] The device for neutralizing combustion ash according to [15] or [16], wherein the wet flue gas desulfurization apparatus comprises a gas absorption device configured to bring combustion exhaust gas into contact with a water slurry containing limestone, slaked lime or quick lime.
[18] The device for neutralizing combustion ash according to [17], further comprising a pipe for adding a liquid obtained by separating the solids from the water slurry containing carbonic acid-treated ash to a water slurry or an aqueous solution containing calcium discharged from the wet flue gas desulfurization apparatus.

### ADVANTAGEOUS EFFECTS OF THE INVENTION

According to the combustion exhaust gas purification treatment method and device of the present invention, carbon dioxide can be efficiently removed using combustion ash by-produced by combustion of coal or biomass fuel, and, if necessary, a water slurry or an aqueous solution containing calcium produced as a by-product in removing sulfur oxides contained in the combustion exhaust gas.

According to the combustion ash neutralization treatment method and device of the present invention, a basic combustion ash can be efficiently neutralized using a gas containing carbon dioxide obtained by removing sulfur oxides contained in combustion exhaust gas and a water slurry or an aqueous solution containing calcium produced as a by-product in removing sulfur oxides contained in the combustion exhaust gas.

### BRIEF DESCRIPTION OF THE DRAWINGS

FIG. 1 is a diagram showing an example of a boiler system.
FIG. 2 is a diagram showing an example of a device for purifying the combustion exhaust gas of the present invention.
FIG. 3 is a diagram showing another example of a device for purifying the combustion exhaust gas of the present invention.
FIG. 4 is a diagram showing another example of a device for purifying the combustion exhaust gas of the present invention.
FIG. 5 is a diagram showing another example of a device for purifying the combustion exhaust gas of the present invention.
FIG. 6 is a diagram showing an example of a device for neutralizing the combustion ash of the present invention.
FIG. 7 is a diagram showing another example of a device for neutralizing the combustion ash of the present invention.
FIG. 8 is a diagram showing another example of a device for neutralizing the combustion ash of the present invention.

### EMBODIMENTS FOR CARRYING OUT THE INVENTION

### [Method for Purifying Combustion Exhaust Gas]

The combustion exhaust gas purification treatment method of the present invention comprises removing sulfur oxides (flue gas desulfurization) from the combustion exhaust gas, and then removing carbon dioxide (flue gas decarboxylation).

Combustion exhaust gas is a gas emitted when fossil fuels such as coal, liquefied natural gas, and oil; biomass fuels such as wood chips, straw, wood waste, animal manure, and kitchen waste; and a mixture of fossil fuels and biomass fuels are burned. Such combustion exhaust gas contains acidic substances that are considered to affect the environment, such as nitrogen oxides, sulfur oxides, and carbon dioxide. In particular, the present invention preferably targets the gas discharged by combustion in a furnace installed in a boiler or the like. Combustion ash (clinker ash) can be obtained from the bottom of the furnace. Also, combustion ash (fly ash) can be obtained from the bottom of the economizer or air preheater.

The combustion exhaust gas purification treatment method of the present invention preferably further comprises removing nitrogen oxides from the combustion exhaust gas, that is, flue gas denitration.

The flue gas denitration can be performed, for example, by bringing the combustion exhaust gas into contact with a denitration catalyst in the presence of a reducing agent such as ammonia. The denitration catalyst to be used is not particularly limited, and examples thereof can include a titanium oxide-based denitration catalyst, a zeolite-based denitration catalyst, and a mixed denitration catalyst thereof. The flue gas denitration is preferably performed before flue gas dust collection and flue gas desulfurization described later.

The combustion exhaust gas purification treatment method of the present invention preferably further comprises removing combustion ash from the combustion exhaust gas, that is, flue gas dust collection.

Flue gas dust collection can be performed, for example, by passing combustion exhaust gas through a dust collector such as a cyclone separator, an electrostatic precipitator, or a bag filter. Combustion ash (fly ash) can be removed from the combustion exhaust gas by flue gas dust collection. Combustion ash (fly ash) can be collected as appropriate and used to remove carbon dioxide, which will be described later.

Flue gas desulfurization is performed by passing the combustion exhaust gas through the wet flue gas desulfurization apparatus 5. As typical methods of the wet flue gas desulfurization, mentioned can be a lime-gypsum method, a magnesium hydroxide method, and a soda method. The wet flue gas desulfurization apparatus used in the present invention preferably comprises a gas absorption device configured to bring combustion exhaust gas into contact with a water slurry containing limestone (CaCO₃), slaked lime (Ca(OH)₂) or quicklime (CaO). In this gas absorption device, the sulfur oxides in the combustion exhaust gas is reacted with limestone, slaked lime or quicklime in the water slurry to obtain calcium sulfite, which is oxidized to obtain calcium sulfate (Gypsum). Using a device for separating and removing gypsum, gypsum is removed from the gypsum slurry (a water slurry containing calcium) discharged from the gas absorption device. Separating and removing of the gypsum gives a gypsum dehydration colature (an aqueous solution containing calcium). On the other hand, gas containing carbon dioxide is discharged from the wet flue gas desulfurization apparatus.

The flue gas decarboxylation is carried out by bringing the carbon dioxide-containing gas obtained by the above-mentioned wet flue gas desulfurization into contact with a water slurry containing combustion ash. Combustion ash may be bottom ash obtained from the bottom of a furnace, fly ash obtained from the bottom of an economizer or air preheater, or fly ash obtained from flue gas dust collection, or combustion ash obtained from other incinerators, thermal power plants, factories. Of these, fly ash is preferably used from the viewpoint of ease of preparation of water slurry. The combustion ash is preferably coal ash, biomass ash, or a mixture of coal ash and biomass ash. The amount of combustion ash contained in the water slurry is not particularly limited, but is preferably 3 to 30% by mass, and more preferably 5 to 15% by mass.

The water used for preparing the water slurry containing combustion ash is not particularly limited, and examples thereof can include industrial water; river, pond or lake water, sea water; calcium-containing water slurry or calcium-containing aqueous solution. The water used for preparing the water slurry containing combustion ash is preferably hard water or a water slurry containing calcium or aqueous solution containing calcium from the viewpoint of carbon dioxide absorption capacity, and is preferably a water slurry containing calcium or an aqueous solution containing calcium discharged from a wet flue gas desulfurization apparatus (for example, a gypsum dehydration colature) from the viewpoint of carbon dioxide absorption capacity and operating cost.

The contact between the gas containing carbon dioxide and the water slurry containing combustion ash can be conducted, for example, by insufflating the gas into the water slurry at a bubble column, a bubble tank, a bubble cap tower, etc., by flowing the water slurry and the gas respectively through a packed column, a wet wall tower, etc., or by flowing the gas and spraying the water slurry in a spray tower or the like. The temperature during the contact is preferably low, preferably 10 to 80 °C, more preferably 30 to 60 °C, from the viewpoint of easiness of dissolving carbon dioxide.

Since the gas from which carbon dioxide has been removed may entrain droplets, it is preferable to pass it through a demister or the like as necessary. Then, it can be discharged to the atmosphere from the chimney.

### [Method for Neutralizing Combustion Ash]

A method for neutralizing combustion ash comprises suspending combustion ash in water, a water slurry containing calcium or an aqueous solution containing calcium to obtain a water slurry containing combustion ash, bringing the water slurry containing combustion ash into contact with a gas containing carbon dioxide to obtain a water slurry containing carbonic acid-treated ash, and separating and removing solids from the water slurry containing carbonic acid-treated ash.

The water used in the combustion ash neutralization treatment method of the present invention may be either hard water or soft water, but hard water is preferable. Further, the calcium-containing water slurry or calcium-containing aqueous solution used in the combustion ash neutralization treatment method of the present invention is preferably discharged from a wet flue gas desulfurization apparatus (for example, gypsum dehydration filtrate or the like). The wet flue gas desulfurization apparatus preferably comprises a gas absorption device configured to bring the combustion exhaust gas into contact with a water slurry containing limestone, slaked lime or quick lime.

The combustion ash to which the combustion ash neutralization treatment method of the present invention can be applied is not particularly limited, but those containing biomass ash are preferable. Biomass ash has a higher basicity than coal ash and is unsuitable for reuse in cement and the like, and may increase the processing cost. By the combustion ash neutralization treatment method of the present invention, combustion ash can be neutralized at low cost and can be made into a material suitable for reuse. The biomass ash may be either bottom ash or fly ash. Further, the combustion ash may be a mixture of biomass ash and coal ash. The amount of combustion ash that can be contained in the water slurry is preferably 3 to 30% by mass, more preferably 5 to 15% by mass.

Neutralization is performed by contacting a water slurry containing combustion ash with a gas containing carbon dioxide. The gas containing carbon dioxide is preferably the gas discharged from the wet flue gas desulfurization apparatus. Contact between the water slurry containing combustion ash and the gas containing carbon dioxide can be performed in a bubble column, a bubble tank, a bubble cap tower, or the like. The temperature at the time of neutralization is not particularly limited, but preferably low, specifically, preferably 10 to 80 °C, and more preferably 30 to 60 °C. By this neutralization, a water slurry containing carbonic acid-treated ash can be obtained.

The solids are separated and taken out from the obtained water slurry containing the carbonic acid-treated ash. The solids can be separated by an ordinary solid-liquid separation operation. The extracted solids (mainly composed of carbonic acid-treated ash) has a pH of around 7, and can be reused for cement or the like.

The liquid obtained by separating the solids from the water slurry containing carbonic acid-treated ash can be used for preparing a water slurry containing limestone, slaked lime or quicklime used in a wet flue gas desulfurization apparatus, or for preparing a water slurry containing combustion ash. Or, it can be added to calcium-containing water slurries or calcium-containing aqueous solutions (eg, flue gas desulfurization wastewater) discharged from wet flue gas desulfurization apparatus.

### [Device for Purifying Combustion Exhaust Gas]

A device for purifying combustion exhaust gas of the present invention, comprises a furnace 1, a wet flue gas desulfurization apparatus 5, a carbon dioxide removal apparatus 11, a duct 7 configured to guide a combustion exhaust gas discharged from the furnace to the wet flue gas desulfurization apparatus, and a duct 14 configured to guide a gas containing carbon dioxide discharged from the wet flue gas desulfurization apparatus to the carbon dioxide removal apparatus. It is preferable that the flue gas denitration device 2 and / or the dust collector 4 is installed in the duct 7 configured to guide the combustion exhaust gas discharged from the furnace to the wet flue gas desulfurization apparatus.

Carbon dioxide removal apparatus 11 comprises a water slurry containing combustion ash, and is configured to bring a gas containing the carbon dioxide into contact with the water slurry containing combustion ash to facilitate a removing carbon dioxide from the gas containing the carbon dioxide. As the carbon dioxide removal apparatus, a bubble column, a bubble tank, a bubble cap tower, or the like can be used. The device for purifying the combustion exhaust gas of the present invention preferably further comprises an apparatus for adding and suspending combustion ash to a water slurry containing calcium or an aqueous solution containing calcium (eg. gypsum dehydration colature) discharged from the wet flue gas desulfurization apparatus to obtain a water slurry containing combustion ash.

The wet flue gas desulfurization apparatus 5 preferably comprises a gas absorption device configured to bring the combustion exhaust gas into contact with a water slurry containing limestone, slaked lime or quick lime, and preferably further comprises a device for separating and removing gypsum. The gas absorption device can be a packed column, a wet wall tower, a spray tower, or the like. The device for separating and removing gypsum can be a known water treatment device. In the water treatment device, flocculation, coagulation, dehydration and the like are performed.

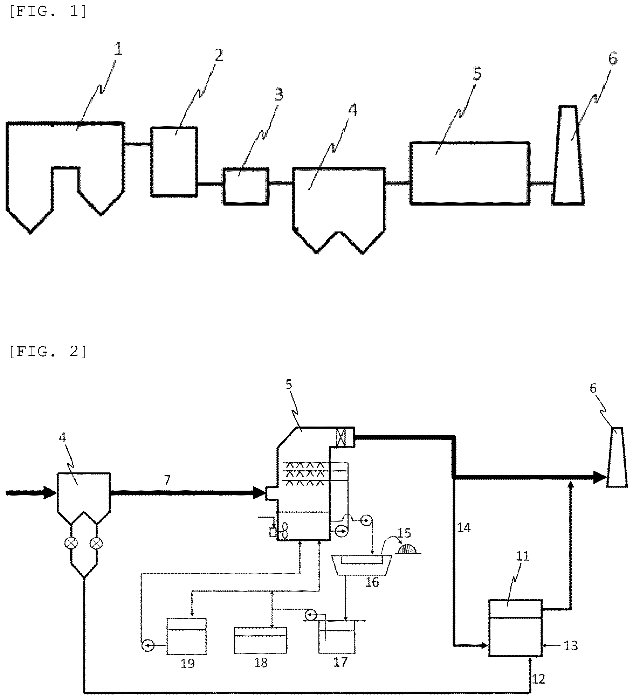

FIG. 2, 3, 4 or 5 shows an example of a device for purifying the combustion exhaust gas of the present invention respectively.

In the combustion exhaust gas purification treatment device shown in FIG. 2, combustion ash (fly ash) is collected by the electrostatic precipitator 4, is supplied by the combustion ash supply device such as a belt conveyor and a screw feeder to the industrial water supplied through the industrial water supply pipe 13, and is suspended to obtain a water slurry, and carbon dioxide is removed by passing a part of the gas that has passed through the wet flue gas desulfurization apparatus 5 through the carbon dioxide removal device 11 equipped with the water slurry, and the CO₂-removed gas is released to the atmosphere through the chimney 6.

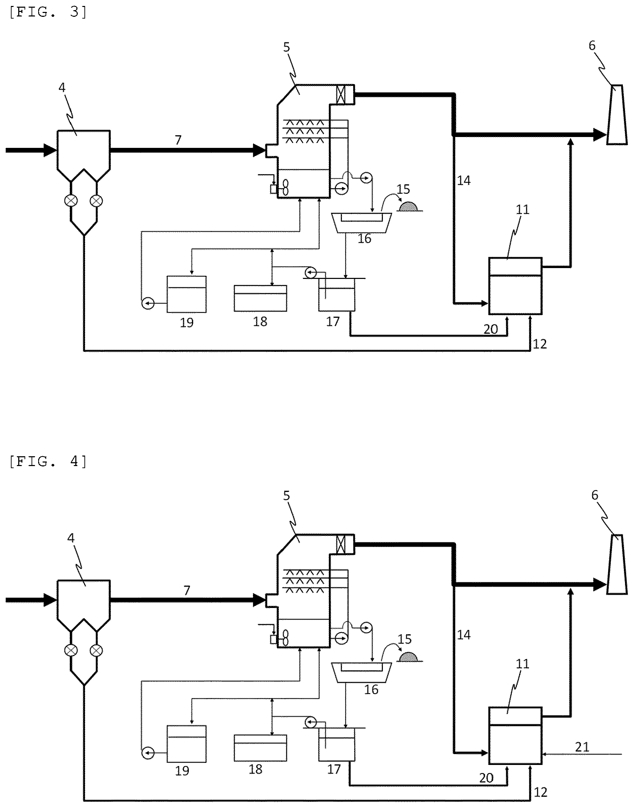

The combustion exhaust gas purification treatment device shown in FIG. 3 is the same as the device shown in FIG. 2 except that the gypsum dehydration filtrate supplied through the gypsum dehydration filtrate supply pipe 20 is used instead of the industrial water. The gypsum dehydration filtrate is a liquid obtained by removing gypsum using filtration or the like from the gypsum-containing water slurry obtained by contact between the gas containing sulfur oxide and the water slurry containing limestone, quicklime or slaked lime in the gas absorption device of the wet flue gas desulfurization apparatus. This liquid is obtained as a water slurry or an aqueous solution containing calcium.

The combustion exhaust gas purification treatment device shown in FIG. 4 is the same as the device shown in FIG. 3 except that the biomass ash supplied via the biomass ash supply device 21 is used in the preparation of the water slurry containing combustion ash. This biomass ash may be obtained by a device for burning biomass fuel at another location and and be transported.

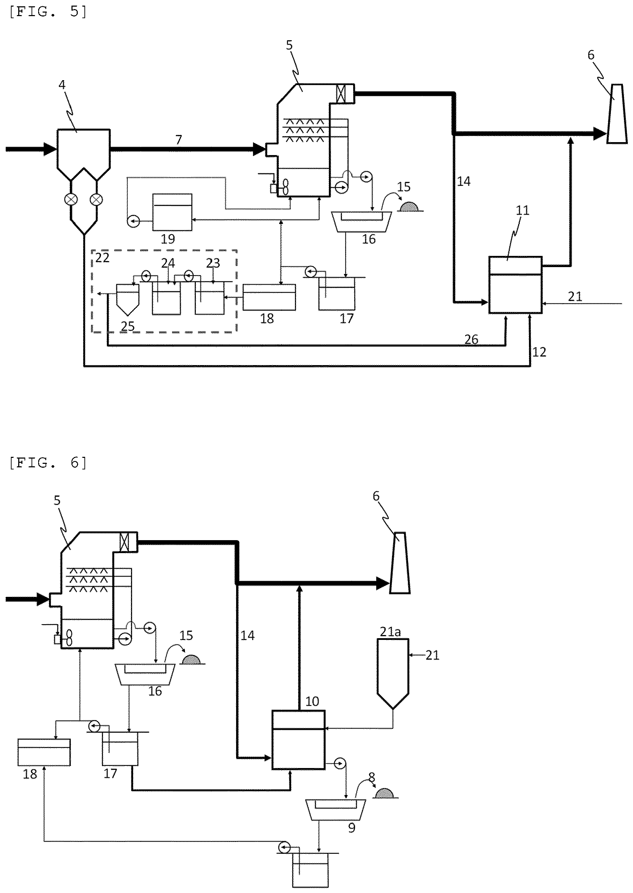

The combustion exhaust gas purification treatment device shown in FIG. 5 is the same as the device shown in FIG. 4 except that water obtained by clarifying the gypsum dehydration filtrate in the water treatment facility 22 is used for preparing a water slurry containing combustion ash. The water treatment facility comprises a pH adjusting tank configured for adding an alkaline agent and for stirring, a coagulation tank configured for adding a coagulant to generate flocs, and a sedimentation tank 25 configured for precipitating the flocs.

### [Device for neutralizing combustion ash]

A device for neutralizing combustion ash of the present invention comprises a wet flue desulfurization apparatus 5, a combustion ash carbonic acid-treatment apparatus 10, a carbonic acid-treated ash separation device 9, and a duct 14 configured to guide a gas containing carbon dioxide discharged from the wet flue gas desulfurization apparatus to the combustion ash carbonic acid-treatment apparatus.

The combustion ash carbonic acid-treatment apparatus facilitates that a gas containing carbon dioxide is brought into contact with the water slurry containing combustion ash obtained by a device for preparing a water slurry containing combustion ash, and the water slurry containing combustion ash is converted into a slurry containing carbonic acid-treated ash. In the combustion ash carbonic acid-treatment apparatus, a bubble column, a bubble tank, a bubble cap tower or the like can be used for contact between the water slurry containing combustion ash and the gas containing carbon dioxide.

The carbonic acid-treated ash separation device facilitates separation and removal of solids from the water slurry containing the carbonic acid-treated ash. The wet flue gas desulfurization apparatus preferably comprises a gas absorption device configured to bring the combustion exhaust gas into contact with a water slurry containing limestone, slaked lime or quick lime. The carbonic acid-treated ash separation device preferably further comprises a pipe configured to transport the liquid obtained by separating solids from a water slurry containing carbonic acid-treated ash for use in the preparation of a water slurry containing limestone, slaked lime or quicklime, for use in the preparation of a water slurry containing combustion ash or for adding to a water slurry or aqueous solution containing calcium discharged from the wet flue gas desulfurization apparatus.

FIG. 6, 7 or 8 shows an example of a device for neutralizing the combustion ash of the present invention respectively.

In the combustion ash neutralization treatment device shown in FIG. 6, biomass ash obtained by a device for burning biomass fuel is transported and stored in the hopper 21a, the stored ash is suspended in a gypsum dehydration filtrate to prepare a water slurry, the biomass ash can be neutralized by passing the gas that has passed through the wet flue gas desulfurization apparatus 5 through the water slurry.

The carbonic acid-treated ash 8 is extracted from the neutralized water slurry by the carbonic acid-treated ash separation device 9. Since carbonic acid-treated ash has low basicity, it can be used as an auxiliary material in the production of cement and the like. The liquid separated by the carbonic acid-treated ash separation device 9 can be returned to the desulfurization drainage tank 18 so as to be used for wet flue gas desulfurization or combustion ash carbonic acid-treatment.

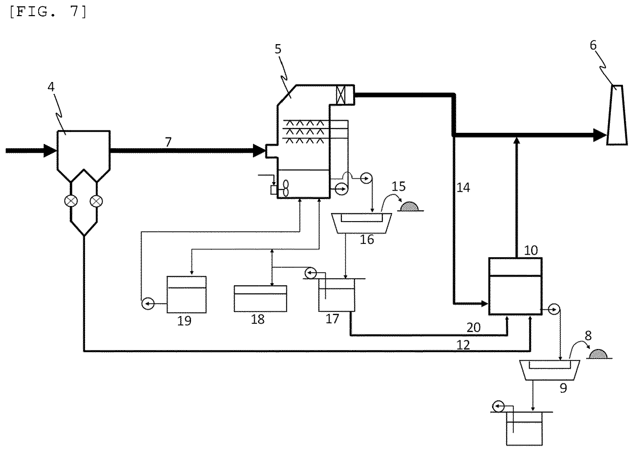

The combustion ash neutralization treatment device shown in FIG. 7 is the same as the device shown in FIG. 6 except that the combustion ash recovered by the electrostatic precipitator 4 is used instead of the biomass ash.

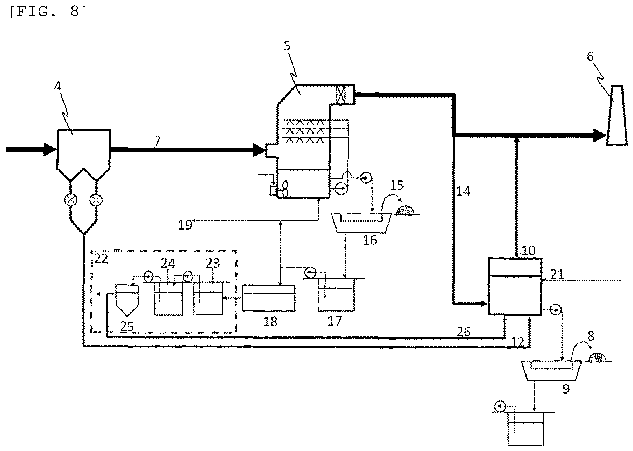

The combustion ash neutralization treatment device shown in FIG. 8 is the same as the device shown in FIG. 7 except that water obtained by clarifying the gypsum dehydration filtrate in the water treatment facility 22 is used for preparing a water slurry containing combustion ash, and biomass ash is replenished by the biomass ash supply device 21 for water slurry preparation.

The effects of the device and method of the present invention are shown below by way of examples.

### (pH of combustion ash)

In 100 ml of pure water, 0.1 g of combustion ash was suspended and the resultant suspension was boiled. The suspension was cooled to room temperature and the pH of the suspension was measured.

### (Alkalinity of combustion ash)

Alkalinity was measured by neutralization titration.

### (Calcium concentration in combustion ash)

Calcium concentration was measured by chelatometric titration.

### (Example 1)

A water slurry was obtained by suspending 10 parts by mass of coal ash having a pH of 10.84, an alkalinity of 4.3 mol / kg and a Ca concentration of 2.5 mol / kg in 90 parts by mass of a gypsum dehydration filtrate having a chlorine concentration of 10 g / L. In a reactor, 400 g of the water slurry was put and stirred while the temperature was adjusted to 20 to 25 °C. A mixed gas of 15 parts by volume of carbon dioxide and 85 parts by volume of air was insufflated into the water slurry at 2.0 L / min through an air stone to perform carbonic acid-treatment. The water slurry was sampled at predetermined time intervals, the sampled slurry was filtered, dried at 40 °C for 2 hours to obtain a solid, and the concentration of carbonic acid component contained in the solid was measured. When there was no change in the concentration of carbonic acid component contained in the solid, the insufflating of carbon dioxide was stopped. The carbonic acid-treated water slurry had a pH of 6.7, and the carbon dioxide immobilized amount was 7 kg-CO₂ / t-ash.

### (Example 2)

Carbonic acid-treatment was carried out in the same manner as in Example 1 except that the gypsum dehydration filtrate was changed to industrial water. The carbonic acid-treated water slurry had a pH of 7.3, and the carbon dioxide-immobilized amount was 5.9 kg-CO₂ / t-ash.

### (Example 3)

Carbonic acid-treatment was carried out in the same manner as in Example 2 except that 10 parts by mass of the coal ash was changed to a mixed ash consisting of 8 parts by mass of coal ash having a pH of 10.84, an alkalinity of 4.3 mol / kg and a Ca concentration of 2.5 mol / kg and 2 parts by mass of old gumwood combustion ash having a pH of 11.74, an alkalinity of 10.0 mol / kg and a Ca concentration of 5.2 mol / kg. The carbonic acid-treated water slurry had a pH of 9.2, and the carbon dioxide-immobilized amount was 37.9 kg-CO₂ / t-ash.

### (Example 4)

Carbonic acid-treatment was carried out in the same manner as in Example 2 except that the coal ash was changed to a combustion ash having a pH of 9.45, an alkalinity of 0.21 mol / kg and a Ca concentration of 0.15 mol / kg. The carbonic acid-treated water slurry had a pH of 6.4, and the carbon dioxide-immobilized amount was 0.2 kg-CO₂ / t-ash.

### (Example 5)

Carbonic acid-treatment was carried out in the same manner as in Example 2 except that the coal ash was changed to an old gumwood combustion ash having a pH of 11.74, an alkalinity of 10.0 mol / kg and a Ca concentration of 5.2 mol / kg. The carbonic acid-treated water slurry had a pH of 8.1, and the carbon dioxide-immobilized amount was 155.7 kg-CO₂ / t-ash.

### (Example 6)

Carbonic acid-treatment was carried out in the same manner as in Example 1 except that the coal ash was changed to an old gumwood combustion ash having a pH of 11.74, an alkalinity of 10.0 mol / kg and a Ca concentration of 5.2 mol / kg. The water slurry before the carbonic acid-treatment was sampled, the sampled slurry was filtered and dried at 40 °C for 2 hours. The obtained combustion ash had a Na ion concentration of 2.8 g / kg and a K ion concentration of 181 g / kg. The amount of alkali metal that causes the alkali-silica reaction which reduces the durability of concrete had been significantly reduced. The carbonic acid-treated water slurry had a pH of 7.9, and the carbon dioxide-immobilized amount was 193.8 kg-CO₂ / t-ash.

### REFERENCE SIGNS LIST

- 1:: Furnace
- 2:: Flue denitration device
- 3:: Air preheater
- 4:: Electrostatic precipitator
- 5:: Wet flue gas desulfurization apparatus
- 6:: Chimney
- 7:: Duct
- 8:: Carbonic acid-treated ash
- 9:: Carbonic acid-treated ash separation device
- 10:: Combustion ash carbonic acid-treatment apparatus
- 11:: Carbon dioxide removal device
- 12:: Combustion ash supply device
- 13:: Industrial water supply pipe
- 14:: CO₂-containing gas induction duct
- 15:: Gypsum
- 16:: Gypsum separation device (dehydrator)
- 17:: Gypsum dehydration filtrate tank
- 18:: Desulfurization drainage tank
- 19:: Limestone slurry preparation tank
- 20:: Gypsum dehydration colature supply pipe
- 21:: Biomass ash supply device
- 21a:: Biomass ash hopper
- 22:: Water treatment facility
- 23:: Alkaline agent Feed
- 24:: Coagulant Feed
- 25:: Sedimentation tank
- 26:: Water treated drainage supply pipe

## Claims

1. A method for purifying combustion exhaust gas, which comprises
passing the combustion exhaust gas through a wet flue gas desulfurization apparatus configured to remove sulfur oxides from the combustion exhaust gas to obtain a gas containing carbon dioxide, and bringing the obtained gas containing carbon dioxide into contact with a water slurry containing combustion ash to remove carbon dioxide from the gas containing carbon dioxide.

2. The method for purifying combustion exhaust gas according to claim 1, wherein the water slurry containing combustion ash is one obtained by adding and suspending combustion ash to a water slurry or an aqueous solution containing calcium discharged from the wet flue gas desulfurization apparatus.

3. The method for purifying combustion exhaust gas according to claim 1 or 2, wherein the combustion ash is coal ash, biomass ash, or a mixture of coal ash and biomass ash.

4. The method for purifying combustion exhaust gas according to any one of claims 1 to 3, wherein the wet flue gas desulfurization apparatus comprises a gas absorption device configured to bring the combustion exhaust gas into contact with a water slurry containing limestone, slaked lime or quick lime.

5. The method for purifying combustion exhaust gas according to claim 4, wherein the wet flue gas desulfurization apparatus further comprises a device for separating and removing gypsum.

6. A method for neutralizing combustion ash, which comprises
suspending combustion ash in water, a water slurry containing calcium or an aqueous solution containing calcium to obtain a water slurry containing combustion ash,
bringing the water slurry containing combustion ash into contact with a gas containing carbon dioxide discharged from a wet flue gas desulfurization apparatus to obtain a water slurry containing carbonic acid-treated ash, and
separating and removing solids from the water slurry containing carbonic acid-treated ash.

7. The method for neutralizing combustion ash according to claim 6, wherein the combustion ash comprises biomass ash.

8. The method for neutralizing combustion ash according to claim 6 or 7, wherein the wet flue gas desulfurization apparatus comprises a gas absorption device configured to bring the combustion exhaust gas into contact with a water slurry containing limestone, slaked lime or quick lime.

9. The method for neutralizing combustion ash according to claim 8, wherein further comprises adding a liquid obtained by separating the solids from the water slurry containing carbonic acid-treated ash to a water slurry or an aqueous solution containing calcium discharged from the wet flue gas desulfurization apparatus.

10. A device for purifying combustion exhaust gas, comprising
a furnace,
a wet flue gas desulfurization apparatus,
a carbon dioxide removal apparatus,
a duct configured to guide a combustion exhaust gas discharged from the furnace to the wet flue gas desulfurization apparatus, and
a duct configured to guide a gas containing carbon dioxide discharged from the wet flue gas desulfurization apparatus to the carbon dioxide removal apparatus;
wherein the carbon dioxide removal apparatus comprises a water slurry containing combustion ash, and is configured to bring the gas containing carbon dioxide into contact with the water slurry containing combustion ash to facilitate a removing carbon dioxide from the gas containing carbon dioxide.

11. The device for purifying combustion exhaust gas according to claim 10, further comprising an apparatus for adding and suspending combustion ash to a water slurry containing calcium or an aqueous solution containing calcium discharged from the wet flue gas desulfurization apparatus to obtain the water slurry containing combustion ash.

12. The device for purifying combustion exhaust gas according to claim 10 or 11, wherein the combustion ash is coal ash, biomass ash, or a mixture of coal ash and biomass ash.

13. The device for purifying combustion exhaust gas according to any one of claims 10 to 12, wherein the wet flue gas desulfurization apparatus comprises a gas absorption device configured to bring the combustion exhaust gas into contact with a water slurry containing limestone, slaked lime or quick lime.

14. The device for purifying combustion exhaust gas according to claim 13, wherein the wet flue gas desulfurization apparatus further comprises a device for separating and removing gypsum.

15. A device for neutralizing combustion ash, comprising a wet flue desulfurization apparatus,
a combustion ash carbonic acid-treatment apparatus, a carbonic acid-treated ash separation device, and
a duct configured to guide a gas containing carbon dioxide discharged from the wet flue gas desulfurization apparatus to the combustion ash carbonic acid-treatment apparatus,
wherein the combustion ash carbonic acid-treatment apparatus comprises a device for preparing a water slurry containing combustion ash, and is configured to bring the gas containing carbon dioxide into contact with the water slurry containing combustion ash obtained by the preparation device to facilitate a converting the water slurry containing combustion ash into a water slurry containing carbonic acid-treated ash, and the carbonic acid-treated ash separation device is configured to facilitate a separating and removing solids from the water slurry containing carbonic acid-treated ash.

16. The device for neutralizing the combustion ash according to claim 15, wherein the combustion ash contains biomass ash.

17. The device for neutralizing combustion ash according to claim 15 or 16, wherein the wet flue gas desulfurization apparatus comprises a gas absorption device configured to bring combustion exhaust gas into contact with a water slurry containing limestone, slaked lime or quick lime.

18. The device for neutralizing combustion ash according to claim 17, further comprising a pipe for adding a liquid obtained by separating the solids from the water slurry containing carbonic acid-treated ash to a water slurry or an aqueous solution containing calcium discharged from the wet flue gas desulfurization apparatus.
